# EUROPEAN PATENT APPLICATION

(11) **EP 1 814 069 A1**
(43) Date of publication of application: **01.08.2007**
(21) Application number: 07250106.7
(22) Date of filing: 11.01.2007
(51) Int. Cl.: G06Q 10/00

(54) **Workflow management system**

(30) Priority: 11.01.2006 JP 2006003500
(71) Applicant: Ricoh Company, Ltd., Tokyo 143-8555 (JP)
(72) Inventor: Suzuki, Takeshi, Yokohama-shi Kanagawa (JP); Maeda, Kaoru, Ichikawa-shi Chiba (JP); Holz, Harald, 67663, Kaiserslautern (DE); Rostanin, Oleg, 67663, Kaiserslautern (DE)
(74) Representative: Leeming, John Gerard

(57) **Abstract**

A disclosed workflow management system includes a first database for holding a task model created by generalizing a past task instance of a workflow; a second database for holding a task instance that is a specific past task instance of a workflow; a task model reusing unit configured to reuse the task model by searching the first database according to user-specified input information and copying information from the task model found; and a task instance reusing unit configured to reuse the task instance by searching the second database according to user-specified input information and copying information from the task instance found.

## Description

The present invention relates generally to workflow management systems.

Workflow management refers to technical means for all fields, including technical fields. In conventional workflow management systems, a workflow model needs to be determined before executing the workflow. However in fields such as research and development or in some service businesses, advance information is often incomplete. Therefore it is difficult to formulate a workflow model in advance. Accordingly, a method called a constructive workflow has been developed, where a model can be dynamically formulated while executing a workflow (see, for example, Japanese Patent Application No. 2005-47792 and Japanese Patent Application No. 2005-154261).

With the above described constructive workflow technology, predetermined workflow components (typical parts of a workflow) can be combined, thereby realizing dynamic definitions of the workflow.

However, there are not enough means for finding appropriate workflow components, and therefore dynamic workflow construction is not very practical.

Further, various information items are necessary for executing a workflow. However, in the conventional technology, a mechanism for providing such information has not been established. Therefore, the actual tasks are executed with inefficient working properties.

The present invention provides a workflow management system in which one or more of the above-described disadvantages is eliminated.

A preferred embodiment of the present invention provides a workflow management system in which existing workflow components used in the past can be easily reused, and related information can be presented in a timely manner.

An embodiment of the present invention provides a workflow management system including a task model holding unit configured to hold a task model created by generalizing a past task instance of a workflow; a task instance holding unit configured to hold a specific past task instance of a workflow; a task model reusing unit configured to reuse the task model by searching the task model holding unit according to user-specified input information and copying information from the task model found; and a task instance reusing unit configured to reuse the task instance by searching the task instance holding unit according to user-specified input information and copying information from the task instance found.

An embodiment of the present invention provides a workflow management method including the steps of (a) holding a task model created by generalizing a past task instance of a workflow; (b) holding a specific past task instance of a workflow; (c) reusing the task model by searching for the task model held at step (a) according to user-specified input information and copying information from the task model found; and (d) reusing the task instance by searching for the task instance held at step (b) according to user-specified input information and copying information from the task instance found.

According to one embodiment of the present invention, a workflow management system is provided in which existing workflow components used in the past can be easily reused, and related information can be presented in a timely manner.

Other objects, features and advantages of the present invention will become more apparent from the following detailed description when read in conjunction with the accompanying drawings, in which:
FIG. 1 is a block diagram of a workflow management system according to an embodiment of the present invention;
FIG. 2 is a block diagram illustrating an example of a structure of a workflow and abstraction levels;
FIG. 3 is an example of a structure of task model data;
FIG. 4 is an example of a structure of task instance data;
FIG. 5 is an example of a structure of domain concept data;
FIG. 6 is an example of related information;
FIG. 7 is a flowchart of a process of searching for and reusing a task model;
FIG. 8 is a flowchart of a process of searching for and reusing a task instance;
FIG. 9 is a flowchart of a process that can be used for searching for and reusing either a task model or a task instance;
FIG. 10 is an example of a UI used for a reuse method (first example);
FIG. 11 is an example of a UI used for a reuse method (second example);
FIG. 12 is an example of a UI used for a reuse method (third example);
FIG. 13 illustrates a flow for searching for and presenting related information;
FIG. 14 is a flowchart of a process of searching for related information based on relationships between tasks;
FIG. 15 is a flowchart of a process of searching for related information from a similar task;
FIGS. 16 and 17 are a flowchart of a process of searching for related information by using matching categories;
FIG. 18 is an example of a UI used for a process performed by a novice user (first example);
FIG. 19 is an example of a UI used for a process performed by a novice user (second example);
FIG. 20 is an example of a UI used for a process performed by a novice user (third example);
FIG. 21 is an example of a UI used for a process performed by an expert user (first example);
FIG. 22 is an example of a UI used for a process performed by an expert user (second example);
FIG. 23 is an example of a UI used for a process performed by an expert user (third example);
FIG. 24 is an example of a UI used for a process performed by an expert user (fourth example);
FIG. 25 is an example of a screen displaying related information (first example);
FIG. 26 is an example of a screen displaying related information (second example);
FIG. 27 is an example of a screen displaying related information (third example); and
FIG. 28 is an example of a screen displaying related information (fourth example).

A description is given, with reference to the accompanying drawings, of an embodiment of the present invention.

### <System configuration>

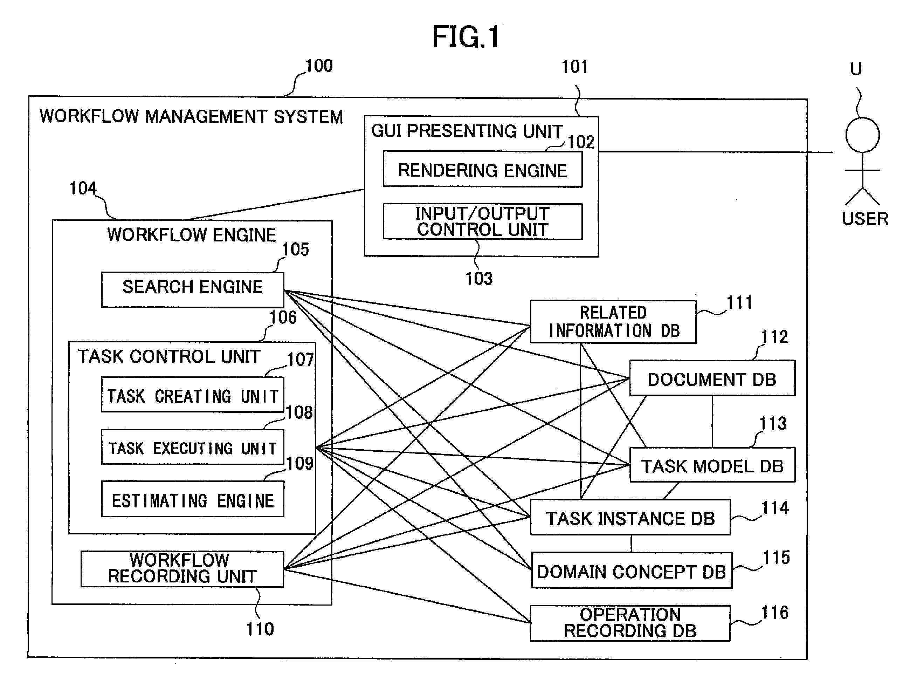

FIG. 1 is a block diagram of a workflow management system 100 according to an embodiment of the present invention. The workflow management system 100 includes a GUI presenting unit 101 that presents a GUI (Graphical User Interface) to a user using the system; a workflow engine 104 that dynamically generates and executes a workflow model by reusing an existing task model and/or a task instance; and various DBs (Data Base) 111 - 116.

The related information DB 111 holds related information referred to when executing a workflow. The document DB 112 holds a document body. The task model DB 113 holds a task model previously abstracted by an administrator. The task instance DB 114 holds past task instances. The domain concept DB 115 holds matching categories including related task instances and related information previously grouped together by an administrator. The operation record DB 116 holds operational records of a workflow. The task model DB 113 and the task instance DB 114 are linked with information loaded in the related information DB 111 and the document DB 112. Contents of the domain concept DB 115 are linked with contents of the task instance DB 114.

The GUI presenting unit 101 includes a rendering engine 102 for rendering a display screen and an input/output control unit 103 for exchanging information with a user U.

The workflow engine 104 includes a search engine 105 for executing various searches in the DBs 111 - 115; a task control unit 106 for controlling a task included in a workflow; and a workflow recording unit 110 for referring to the DBs 111 - 115, monitoring operations of the user U and the workflow management system 100, and recording operations of a workflow in the operation recording DB 116.

The task control unit 106 includes a task creating unit 107 for creating a task; a task executing unit 108 for executing a created task; and an estimating engine 109 for estimating the present task of the user U based on information in the operation recording DB 116 and searching for related information in the DBs 111 - 114.

A summary of operations is given below. The user U operates the workflow engine 104 with the input/output control unit 103 of the GUI presenting unit 101. Specifically, operations include creating a workflow, executing a workflow, creating a workflow model, loading related information and documents, and linking these with a workflow instance and/or a workflow model.

When creating a workflow, the search engine 105 of the workflow engine 104 executes various searches in the DBs 111 - 115.

The task control unit 106 of the workflow engine 104 uses the task model DB 113 and the task instance DB 114 to control a task based on instructions from the user U. The task creating unit 107 of the task control unit 106 creates a task based on information in the DBs 111 - 114 according to instructions from the user U, and performs operations such as linking information. The task executing unit 108 uses information in the task instance DB 114 according to instructions from the user U, and renews the actual task information (execution of a task corresponds to renewing task information from the system's viewpoint). The estimating engine 109 estimates the present task of the user U based on information in the operation recording DB 116, and searches for related information in the DBs 111 - 114.

The workflow recording unit 110 monitors operations of the user U and the workflow management system 100, and loads operational records of a workflow in the operation recording DB 116.

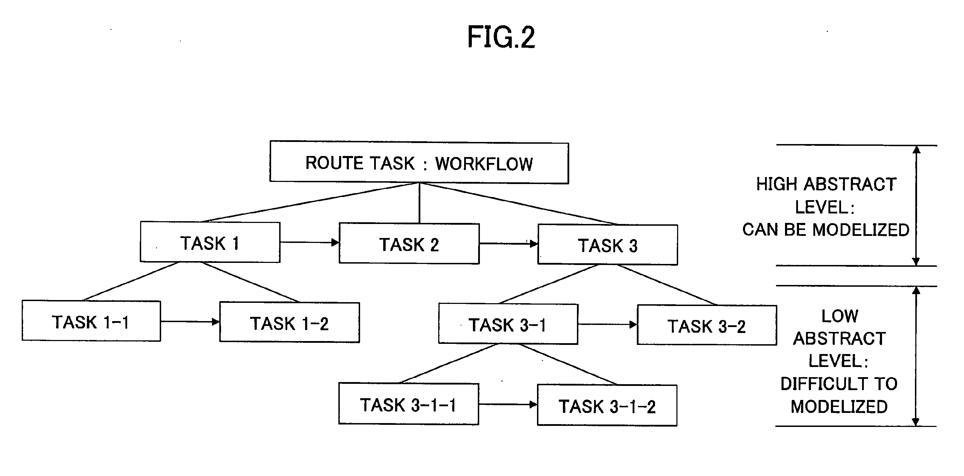

FIG. 2 is a block diagram illustrating an example of a structure of a workflow and abstraction levels. In FIG. 2, a workflow corresponding to a root task includes an arbitrary number of tasks. Each of the tasks further includes an arbitrary number of tasks. Thus, a workflow can include plural tasks, and each task can include plural sub-tasks, and their order relationship (indicated by arrows in FIG. 2) is the same as typical workflow management systems.

In fields where prior information is incomplete, such as in research and development, a workflow with a high level of abstraction can be generalized and modelized (made into models). However, specific details having evident individualities according to cases are difficult to modelize. Therefore, it is efficient to refer to modelized information for parts with a high level of abstraction, and refer to individual cases that are not yet modelized for detailed parts.

The workflow management system 100 according to the embodiment of the present invention reuses generalized task models and information related thereto for a workflow with a high level of abstraction, and reuses task instances that are past examples (best practice) for detailed parts of a workflow. Accordingly, productivity in an operation using a workflow is optimized in the overall system.

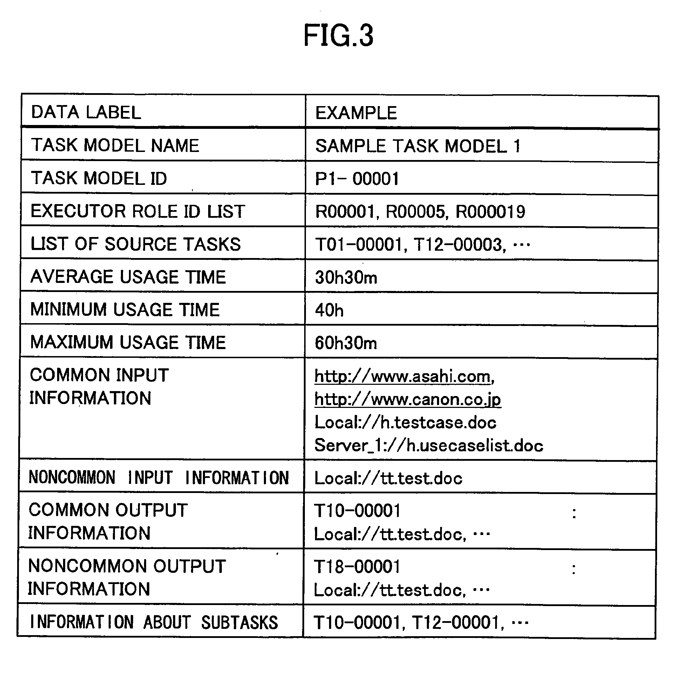

FIG. 3 is an example of task model data loaded in the task model DB 113. Data labels include task model name, task model ID, executor role ID list, list of original tasks, average usage time, minimum usage time, maximum usage time, common input information, noncommon input information, common output information, noncommon output information, and information about subtasks.

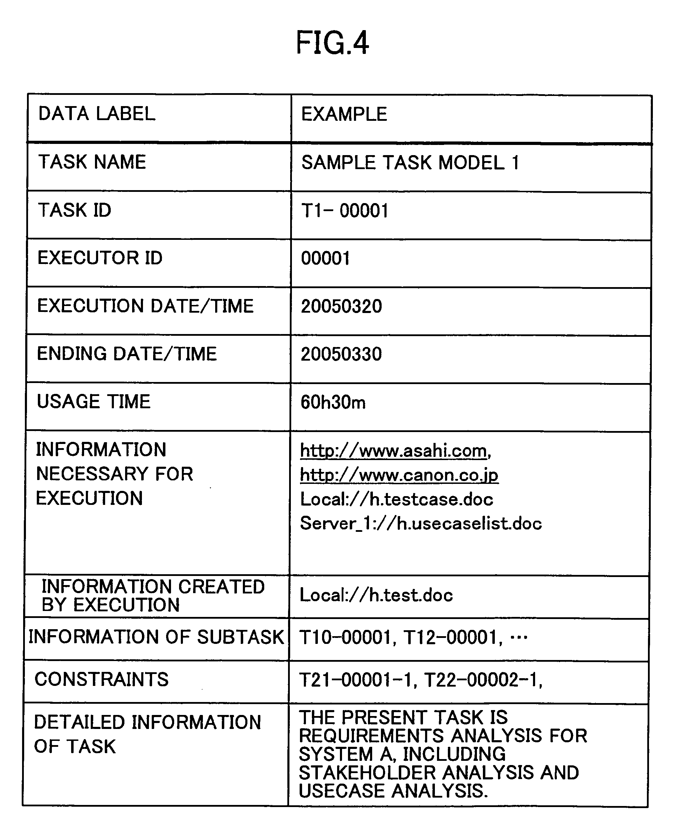

FIG. 4 is an example of task instance data loaded in the task instance DB 114. Data labels include task name, task ID, executor ID, execution date/time, ending date/time, usage time, information necessary for execution, information created by execution, information of subtask, constraints, and detailed information of task.

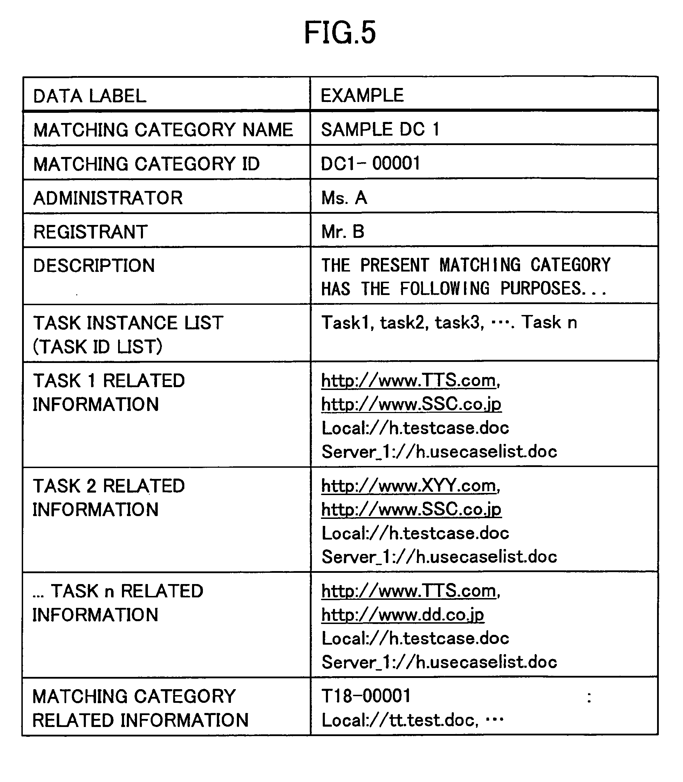

FIG. 5 is an example of domain concept data loaded in the domain concept DB 115. Data labels include matching category name, matching category ID, administrator, registrant, description, task instance list (task ID list), Task 1 related information, Task 2 related information, ... Task n related information, and matching category related information.

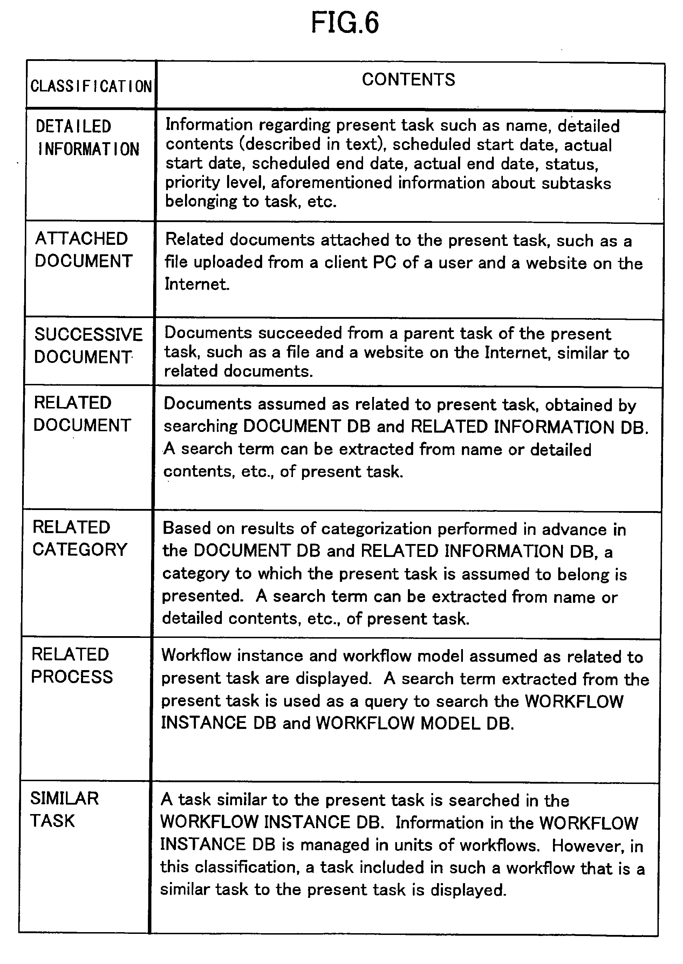

FIG. 6 is an example of related information. The related information is classified into detailed information, attached document, successive document, related document, related category, related process, and similar task. In addition, the related information can also be classified into list of related organizations, list of executors, etc.

### <Reuse of task>

The embodiment of the present invention is based on a management system capable of dynamically changing and renewing a task included in a workflow while the workflow is being executed, and a support system for searching and reusing similar past tasks.

There are two methods of reusing tasks as follows.
(1) Instance-based reuse
(2) Model-based reuse

An instance refers to a specific past task, and a model refers to generalized and abstracted instances. In the present invention, both of these methods can be employed.

Reusing at an instance level means to directly reuse various information items of a past task ((1) executor, (2) execution date/time, (3) ending date/time, (4) usage time, (5) information necessary for execution, (6) product obtained by execution, (7) constraints, (8) subtask included in task and information of relationship thereof, and (9) information corresponding to (1) - (8) for subtask). Specifically, this information is copied to a present task. It is possible to filter this information when being copied, e.g., delete/change information that is inappropriate for reusing, such as execution date/time.

Model-based reuse means to apply a model, which is an abstracted past task, to a present task. Compared to instance-based reuse, model-based reuse is primarily used for general tasks. The model is managed in the task model DB 113 functioning as a task model library.

A general user of the system or an administrator of the task model library creates the model by generalizing a past task. For example, in requirements analysis tasks regarding products A, B, C, and D, there are reasonably common factors between the tasks. Accordingly, these tasks are generalized and loaded in a reusable format, thereby creating a model. Reusable information includes, for example, (9) role of executor, i.e., position or skill level, (10) information regarding execution time such as average, minimum, and maximum execution time, (11) information necessary for execution common to the instances, e.g., a template and information regarding a special factor such as target users of the products, (12) a product created by execution common to the instances, such as a part of the template actually commonly used or a special factor, e.g., a part of the template only used in some of the instances, (13) information corresponding to (1) - (8) described above about an example of a fragmented subtasks included in a task, i.e., subtasks common to the instances and a special subtask not common to the instances, and (14) a list of original tasks for the present task model.

A model includes subtask information in a hierarchical manner, and therefore, it is possible to specify and reuse tasks by layers. In order to apply a model, the present task needs to be changed into an instance. The embodiment of the presentation includes functions for supporting the process of changing the present task into an instance. That is, the present time is presented as a start date/time, an ending date/time analogized from the information of (10) described above is presented as an ending date/time, information necessary for execution common to the past instances is presented as common information, and information necessary for execution not common to the past instances is presented as special information. Principally, an administrator directly creates a task model from task instances.

### <Process of task reuse>

The workflow management system 100 according to the embodiment of the present invention automatically or manually presents information necessary for a workflow with a high level of abstraction, and presents reference means for specific examples as the tasks become more detailed.

The workflow management system 100 according to the embodiment of the present invention automatically detects a search term from a task name, and automatically searches and presents a task model based on the search term. For example, a method disclosed in literature "BrainBot BrainFiler" (http://brainbot.com/site3/produkte/brainfiler/) can be used for extracting a search term from a task name. In order to realize this method, the task models need to have a natural sentence describing contents of the task. The search term detected from the task name and a natural sentence are matched in order to determine a similarity level with a task model. A similarity level between terms can be determined by using, for example, a vector distance method. A user determines whether the presented task model is to be reused.

Another method of extracting a search term from a task name is to use a special-purpose dictionary. Such a dictionary includes frequently used terms that are classified according to fields (such as designing of chemical plants, designing circuits for battery driving units of mobile phones), and these terms are matched with the task name. It is possible to have a general-purpose dictionary for holding typical terms (such as analysis, design).

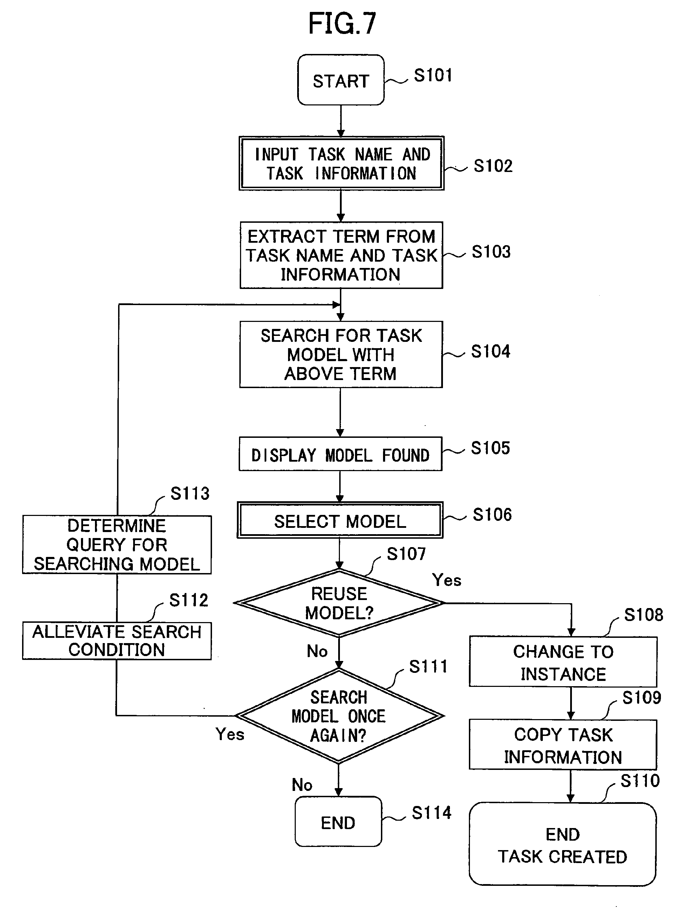

FIG. 7 is a flowchart of a process of searching for and reusing a task model. Boxes enclosed by double lines represent user actions.

Referring to FIG. 7, when the process starts (step S101), a user inputs a task name and task information (step S102), a term is extracted from the task name and task information (step S103), and a task model is searched for based on the extracted term (step S104).

Next, a task model (or models) found is displayed (step S105), the user selects a task model (step S106), the user gives an instruction to reuse the selected task model (Yes in step S107), the task model is changed into a task instance (step S108), task information is copied (step S109), a task is generated, and the process ends (step S110). When copying task information (model-based reuse), task information based on the data structure shown in FIG. 3 is copied.

When the user gives an instruction not to reuse the selected task model (No in step S107), and when the user gives an instruction to conduct a search again (Yes in step S111), search conditions are alleviated (step S112), a search query is determined (step S113), and the process returns to searching for a task model again (step S104). There are several methods of changing the search conditions, which methods involve alleviating a threshold of a degree of matching with a search term (query).

When the user gives an instruction not to conduct the search again (No in step S111), the process ends (step S114).

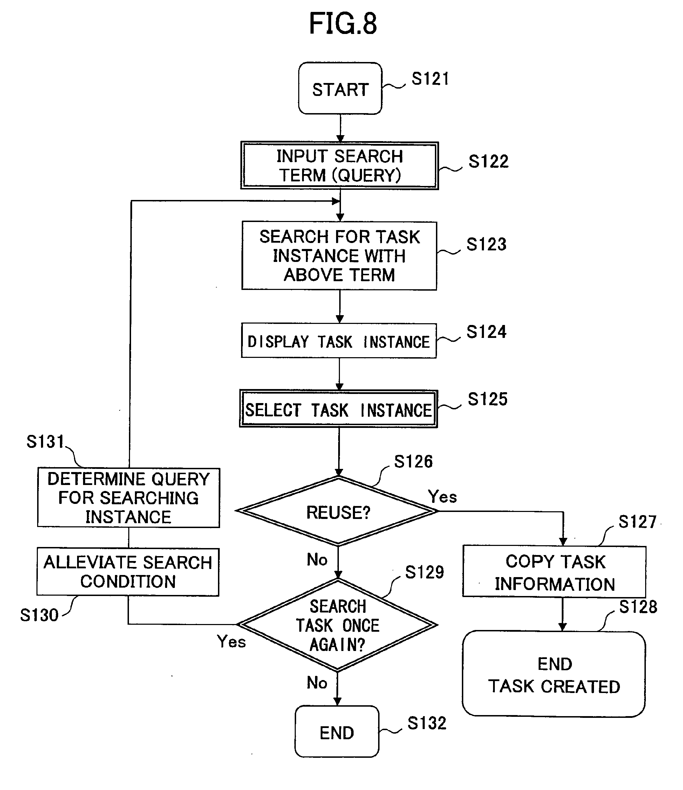

FIG. 8 is a flowchart of a process of searching for and reusing a task instance. Referring to FIG. 8, when the process starts (step S121), a user inputs a search term (step S122), and a task instance is searched for based on the search term (step S123).

Next, a task instance (or instances) found is displayed (step S124), the user selects a task instance (step S125), the user gives an instruction to reuse the selected task instance (Yes in step S126), task information is copied (step S127), a task is generated, and the process ends (step S128). When copying task information (instance-based reuse), task information based on the data structure shown in FIG. 4 is copied.

When the user gives an instruction not to reuse the selected task model (No in step S126), and when the user gives an instruction to conduct a search again (Yes in step S129), search conditions are alleviated (step S130), a search query is determined (step S131), and the process returns to searching for a task instance again (step S123). When the user gives an instruction not to conduct a search again (No in step S129), the process ends (step S132).

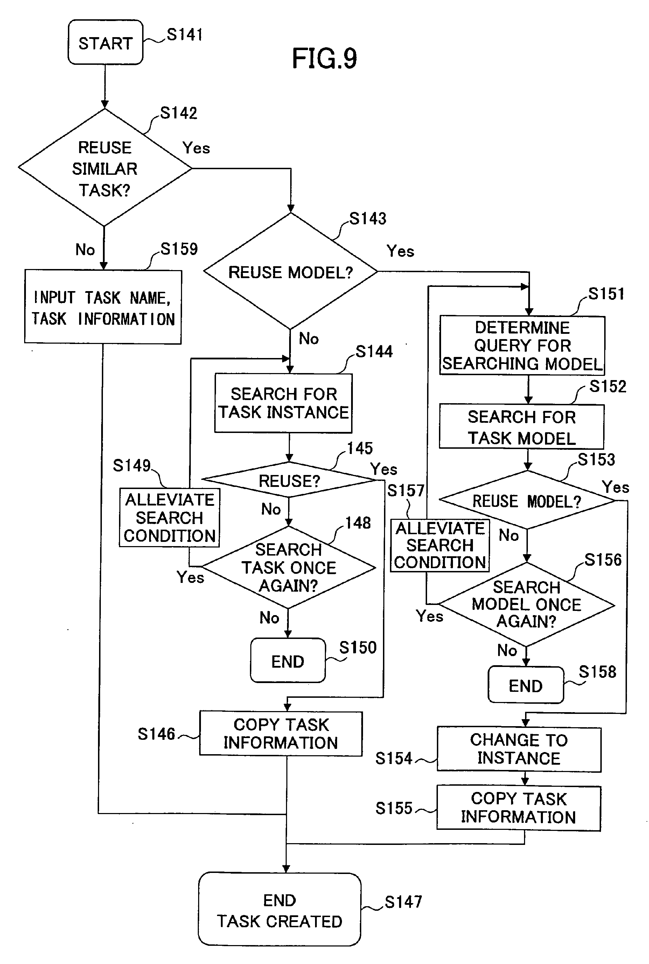

FIG. 9 is a flowchart of a process that can be used for searching for and reusing either a task model or a task instance. Referring to FIG. 9, when the process starts (step S141), a user inputs an instruction whether to reuse a similar task (step S142). When the user gives an instruction to reuse a similar task (Yes at step S142), it is determined whether the reuse method is a model-based reuse (step S143). When the reuse is not a model-based reuse (i.e., the reuse is an instance-based reuse) (No in step S143), a task instance is searched for (step S144). The user gives an instruction whether to reuse a task instance found (step S145). When the user gives an instruction to reuse a task instance found (Yes in step S145), task information is copied (step S146), a task is generated, and the process ends (step S147).

When the user gives an instruction not to reuse the task instance found (No in step S145), the user gives an instruction whether to conduct a search again (step S148). When the user gives an instruction to conduct a search again (Yes in step S148), search conditions are alleviated (step S149), and the process returns to searching for a task instance again (step S144). When the user gives an instruction not to conduct a search again (No in step S148), the process ends (step S150).

When the reuse method is a model-based reuse (Yes in step S143), a search query is determined (step S151), and a task model is searched for (step S152). The user gives an instruction whether to reuse a task model found (step S153). When the user gives an instruction to reuse a task model found (Yes in step S153), the task model is changed into a task instance (step S154), task information is copied (step S155), a task is generated, and the process ends (step S147).

When the user gives an instruction not to reuse the selected task model (No in step S153), the user gives an instruction whether to conduct a search again (step S156). When the user gives an instruction to conduct a search again (Yes in step S156), search conditions are alleviated (step S157), and the process returns to determining a search query again (step S151). When the user gives an instruction not to conduct a search again (No in step S156), the process ends (step S158).

When the user gives an instruction not to reuse a similar task (No at step S142), a task name and task information are input (step S159), a task is generated, and the process ends (step S147).

### <Example of UI for reuse>

Information about task configurations is held and reused both in the model-based reuse method and the instance-based reuse method. Therefore, a reuse method described below can be applied to both model-based reuse and instance-based reuse, and the UI (User Interface) can be made uniform.

A task may include plural subtasks. Therefore, when reusing task information, information about subtasks of the task is also necessary. However, some subtasks may have contents specific to a particular task. In this case, part of the task configuration may be changed/deleted. Accordingly, there is a need for a function for selecting subtasks to be reused. Specifically, such a function is realized by selecting subtasks to be reused from a list of subtasks included in a task.

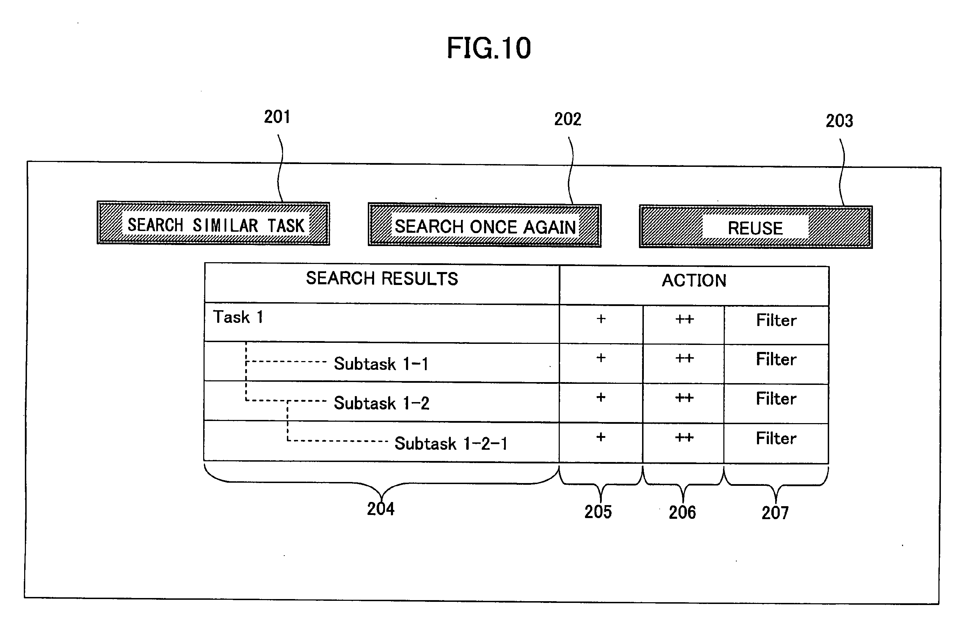

FIG. 10 is an example of a UI used for a reuse method. In FIG. 10, the UI is displaying a button 201 for directing a search for a similar task, a button 202 for directing a search once again, a button 203 for directing reuse, tasks found as a result of search 204, and buttons 205 to 207 for directing actions for the search results. By pressing the button 205 "+" on the right side of a subtask to be reused among the search results 204, and then pressing the "reuse" button 203 at the top, information about the selected subtask is copied to the present task. By pressing the button 206 "++", the task can be reused by each subtask.

In reusing task information, it is necessary to distinguish information to be reused from information not to be reused. Information to be reused is, for example, average time required for executing the task, skill required for executing the task, and information about roles. Information not to be reused is, for example, a specific date/time of execution, and a specific executor. This distinction may vary according to the status of the task and/or a user's preference. Therefore, the user is preferably allowed to change the selected information to be reused.

This can be realized by providing "filter" buttons 207 in the workflow management system 100 according to the embodiment of the present invention, as shown in FIG. 10. By pressing the "filter" button 207, an information item previously specified is excluded when task information is copied. The specified information item can be changed by a user.

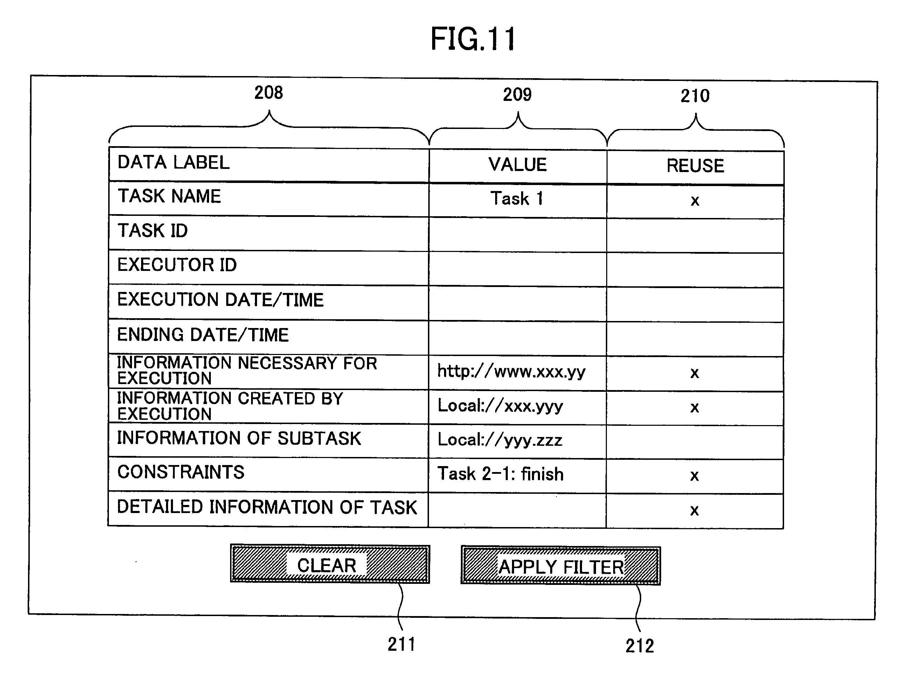

FIG. 11 is a screen displayed after the "filter" button 207 is pressed in FIG. 10. Data labels 208 and corresponding actual values 209 of the task are displayed, and the user can determine whether to reuse the information item by marking check boxes 210. With a "clear" button 211 shown in FIG. 11, it is possible to make a selected cell blank. With an "apply filter" button 212, the filter function can be applied.

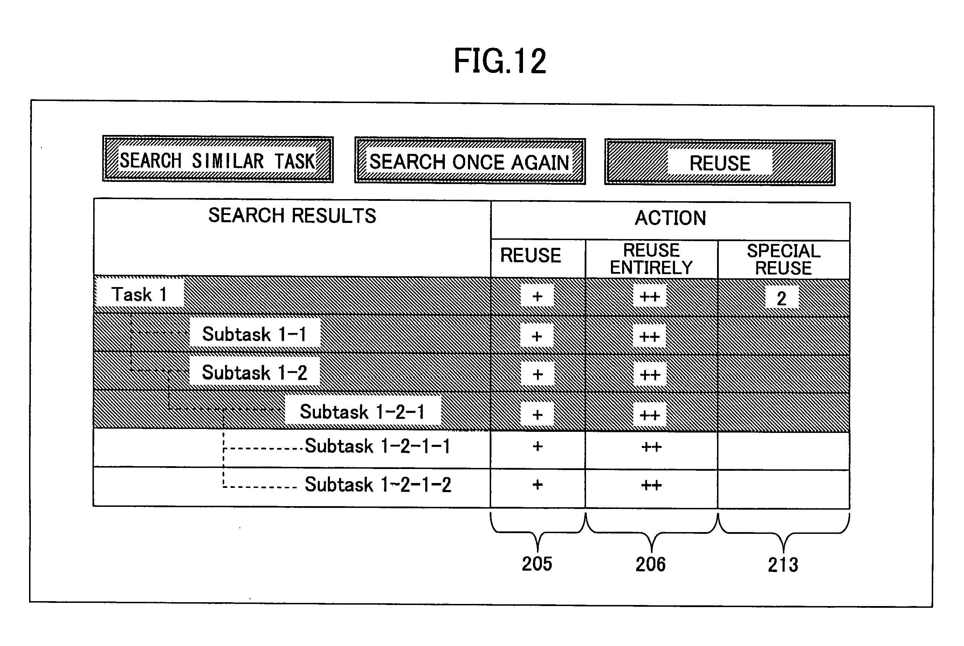

The workflow management system 100 according to the embodiment of the present invention provides a more detailed method of selecting a task to be reused, as shown in FIG. 12. When the task configuration is complicated, there may be cases where the user desires to select plural subtasks at once. In such a case, the function illustrated in FIG. 12 facilitates the operation of copying task information including subtasks. Specifically, "special reuse" buttons 213 are provided in addition to the normal "reuse" buttons 205 and the "reuse entirely" buttons 206. According to a value specified with the "special reuse" button 213, the number of layers of subtasks to be reused is determined. The example shown in FIG. 12 indicates that subtasks up to the second layer of Task 1 are to be reused.

### <Presentation of related information>

The embodiment of the present invention includes a mechanism for enhancing usability of a dynamic workflow by providing information required by a user for executing the workflow. This function is referred to as timely information delivery.

The information necessary for executing the workflow refers to the following two sets of information.
(1) Information about subtask included in task (process information: how a task can be fragmented into small tasks, and the order in which the small tasks are executed, etc.)
(2) Information necessary for executing task (domain information: for example, existing related documents, standards, input/output information of a task such as operation examples of a similar past task)

Process information is already proposed by the inventor of the present invention, and therefore, domain information necessary for executing tasks is described below.

The domain information primarily includes "information about a domain of a task" (for example, in an operation (task) of designing a battery driving device for a mobile phone, specifications of battery driving devices for mobile phones developed in the past, usable battery types, etc.), and "input/output information of a task" (design specification template, etc.). Both information about a domain of a task and input/output information of a task are managed in the related information DB 111 and the document DB 112 shown in FIG. 1.

A task can have subtasks arranged in a hierarchical manner. The tasks and subtasks can include related information and related documents. Referring to FIG. 2, a particular task such as task 3-1 has a parent task 3 and subtasks 3-1-1, 3-1-2. The subtasks may be undetermined until execution, but the parent task needs to be determined already. Therefore, information related to at least the parent task (task 3) (managed in the related information DB 111 and the document DB 112) can be used when executing the task 3-1. Information related to the parent task is also highly related to the subtasks, and is therefore effective for task execution.

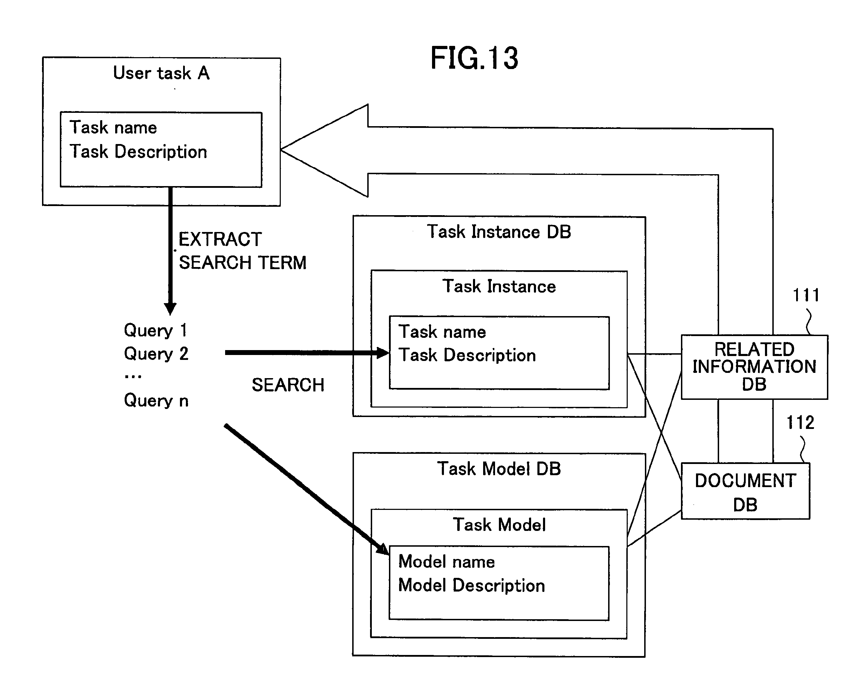

FIG. 13 illustrates a flow for searching and presenting related information for realizing the timely information delivery. The workflow management system 100 according to the embodiment of the present invention automatically detects a search term from a task name of the task being referred to by a user (in this example, User task A). Based on the search term, task instances and task models are searched for. For example, a method disclosed in literature "BrainBot" BrainFiler" (http://brainbot.com/site3/produkte/brainfiler/) can be used for extracting a search term from a task name. In order to realize this method, the task instances and the task models need to have a natural sentence describing contents of the task. The search term detected from the task name and a natural sentence are matched in order to determine a similarity level with a task model. A similarity level between terms can be determined by using, for example, a vector distance method.

Another method of extracting a search term from a task name is to use a special-purpose dictionary. Such a dictionary includes frequently used terms that are classified by fields (such as designing of chemical plants, designing circuits for battery driving units of mobile phones), and these terms are matched with the task name. It is possible to have a general-purpose dictionary for holding typical terms (such as analysis, design).

Information related to task instances or task models found as a result of the search is searched for in the related information DB 111 or the document DB 112, and the information is presented as information related to User task A.

### <Process of presenting related information>

In order to reuse a task, it is necessary to search for a past task that is likely to provide information effective for the present task.

Each task has a task name as minimal information. A task can also have additional information such as (1) executor, (2) execution date/time, (3) ending date/time, (4) usage time, (5) information necessary for execution, (6) product obtained by execution, (7) constraints, (8) subtask included in task and information of the relationship thereof, and (15) detailed description of task. Similar tasks are searched for by using this information. For example, similar tasks can be searched for by using words included in a task name and a task description as keywords. The search can be conducted by using any of the information items of (1) - (8) or by using them in combination. Further, the search can be conducted by combining (13) information about common subtasks and a special, noncommon subtask included in a task, (14) a list of original tasks for the present task model, and (15) detailed description of a task.

### <Process of search for related information>

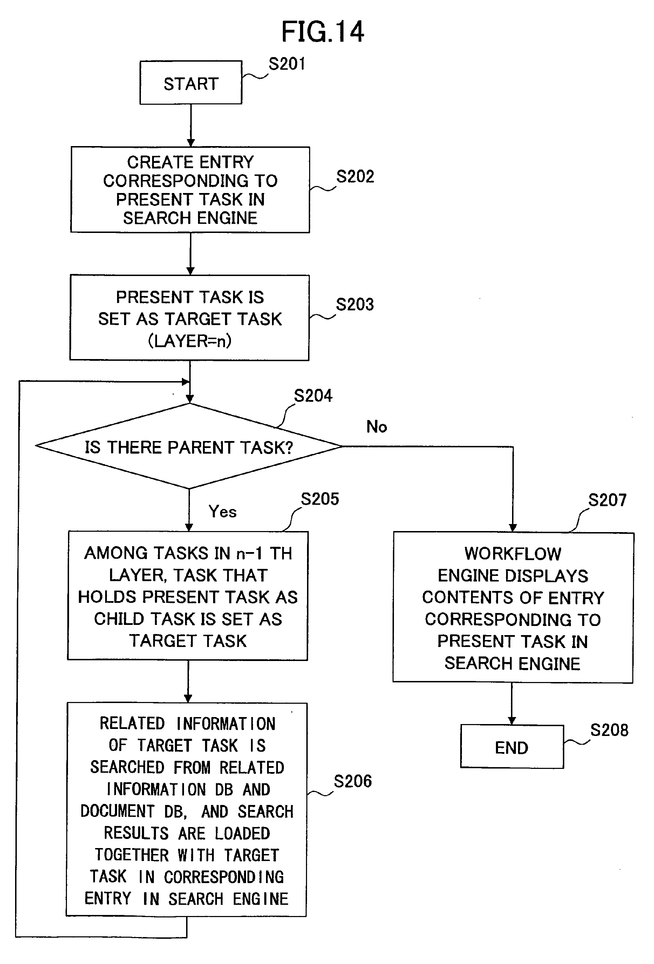

FIG. 14 is a flowchart of a process of searching for related information based on relationships between tasks. Referring to FIG. 14, when the process starts (step S201), an entry corresponding to the present task is created in the search engine 105 (step S202), and the present task is set as a target task (step S203). The layer of the present task is n.

Next, it is determined whether there is a parent task in the target task (step S204). When there is a parent task (Yes in step S204), among tasks in an n-1 th layer, a task that holds the present task as a child task is set as a target task (step S205). Related information of the target task is searched for in the related information DB 111 and the document DB 112, and search results are loaded together with the target task in a corresponding entry in the search engine 105 (step S206). The process returns to determining whether there is a parent task (step S204).

When there is no parent task (No in step S204), the workflow engine 104 displays contents of the entry corresponding to the present task in the search engine 105 (step S207), and the process ends (step S208).

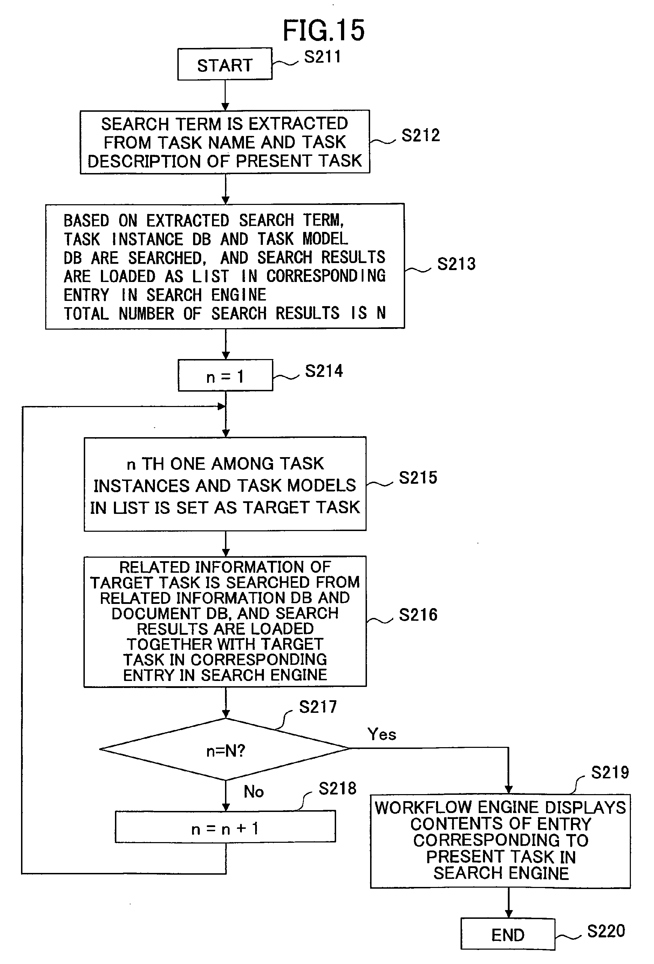

FIG. 15 is a flowchart of a process of searching for related information in a similar task. Referring to FIG. 15, when the process starts (step S211), a search term is extracted from the task name and task description of the present task (step S212). Based on the extracted search term, the task instance DB 114 and the task model DB 113 are searched, and the search results are loaded as a list in a corresponding entry in the search engine 105 (step S213). The total number of search results is N.

Next, a variable n (serial number of task instance and task model in list) is set as "1" (step S214), and the n th one among task instances and task models in the list is set as a target task (step S215). Related information of the target task is searched for in the related information DB 111 and the document DB 112, and search results are loaded together with the target task in a corresponding entry in the search engine 105 (step S216).

Next, it is determined whether the variable n has reached the total number of search results N (step S217), and if not (No in step S217), the variable n is incremented (step S218), and the process returns to setting the target task (step S215).

When the variable n has reached the total number of search results N (Yes in step S217), the workflow engine 104 displays contents of the entry corresponding to the present task in the search engine 105 (step S219), and the process ends (step S220).

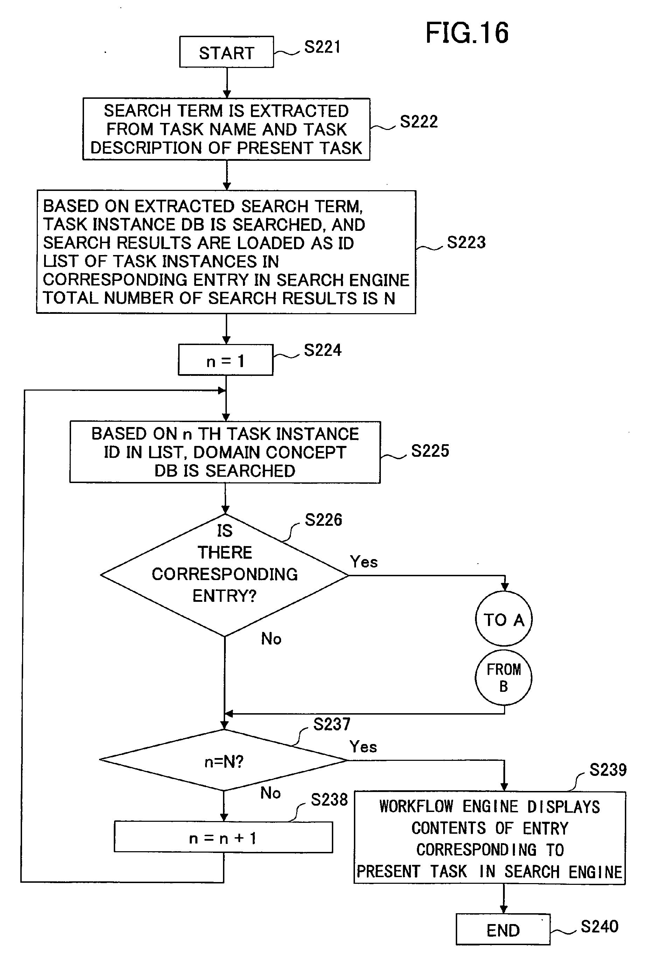

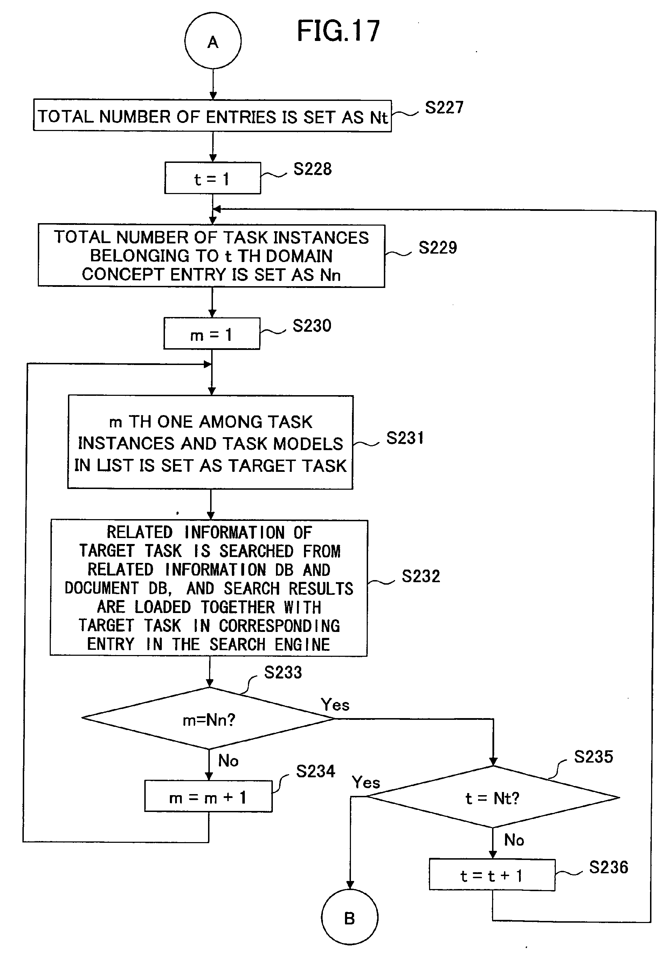

FIGS. 16 and 17 are a flowchart of a process of searching for related information by using matching categories.

With related information associated with a single similar task, there are cases where sufficient information cannot be obtained for executing the present task. To solve this problem, tasks loaded in the task instance DB 114 are divided into groups, and related information of tasks in a group including a task similar to the present task in the task instance DB 114 is presented. This system is referred to as matching category. Additional descriptions of the matching category system are given below.

A function similar to matching category can be realized by presenting plural candidate tasks when searching for similar tasks. However, it is not possible to reflect associations between tasks based on ad hoc opinions or experiences of the system administrator or other experts managing the task. Therefore, it is necessary for experts of the corresponding task (for example, in the above-described example of the mobile phone battery, experts in designing a driving circuit or experts of requirements analysis) to associate tasks beforehand. Reference is made to these associations in order to reuse knowledge and experience of experts of a domain to which the present task belongs.

The matching category system includes the task instance DB 114 for managing individual tasks and the domain concept DB 115 for managing information of a task group. The domain concept DB 115 manages data as show in FIG. 5. Related information of each task is also managed in the task instance DB 114, and thus does not need to be managed in the domain concept DB 115. However, the related information is assumed to be also managed in the domain concept DB 115 in this example because operability is enhanced when editing a matching category. In addition to related information associated with task instances, information associated with matching categories (described as "matching category related information" in FIG. 5) is also added.

Similar to task instances and task models, it is possible to find in the domain concept DB 115 a matching category related to the present task by extracting a search term from a task name and a task description of a present task, and conducting a search based on the extracted search term. In this case, the task instance DB 114 is searched based on the search term, a corresponding task is detected, and a matching category is searched for based on a task ID of the detected task.

Referring to FIGS. 16 and 17, when the process starts (step S221), a search term is extracted from a task name and a task description of the present task (step S222). Based on the extracted search term, the task instance DB 114 is searched, and the search results are loaded as an ID list of task instances in a corresponding entry in the search engine 105 (step S223). The total number of search results is N.

Next a variable n is set as "1" (step S224), and based on the n th task instance ID in the list, the domain concept DB 115 is searched (step S225).

Next, it is determined whether there is a corresponding entry (step S226), and when there is an entry (Yes in step S226), the total number of entries is set as Nt (step S227), and a variable t is set as "1" (step S228). The total number of task instances belonging to the t th domain concept entry is set as Nn (step S229).

Next, a variable m is set as "1" (step S230), and the m th one among task instances and task models in the list is set as a target task (step S231). Related information of the target task is searched for in the related information DB 111 and the document DB 112, and search results are loaded together with the target task in a corresponding entry in the search engine 105 (step S232).

Next, it is determined whether the variable m has reached Nn (step S233), and if not (No in step S233), the variable m is incremented (step S234), and the process returns to setting the target task (step S231).

When the variable m has reached Nn (Yes in step S233), it is determined whether the variable t has reached Nt (step S235), and if not (No in step S235), the variable t is incremented (step S236), and the process returns to setting the total number of task instances (step S229).

Next, when the variable t has reached Nt (Yes in step S235), it is determined whether the variable n has reached N (step S237), and if not (No in step S237), the variable n is incremented (step S238), and the process returns to searching the domain concept DB 115 (step S225).

When the variable n has reached N (Yes in step S237), the workflow engine 104 displays contents of the entry corresponding to the present task in the search engine 105 (step S239), and the process ends (step S240).

### <Example UI for process performed by user>

A description is given of example UIs used when the workflow management system 100 according to the embodiment of the present invention is applied to "requirements analysis", which is a typical example of research and development.

A first example is a UI for a user of the workflow management system 100 who is a beginner at requirements analysis (novice user), and a second example is a UI for a user of the workflow management system 100 who is skilled at requirements analysis (expert user).

### <Example UI for process performed by novice user>

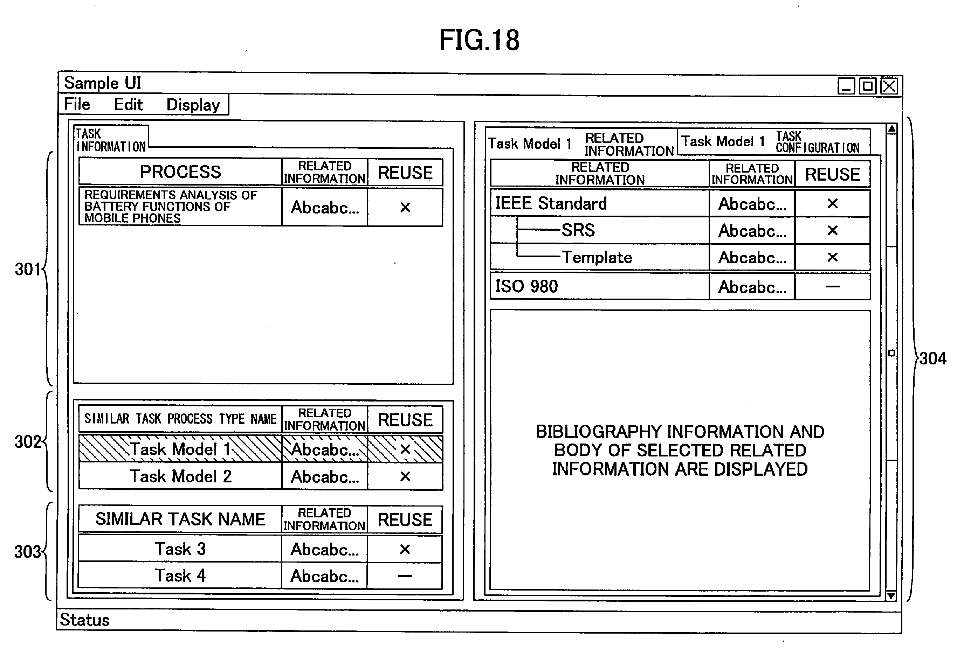

FIGS. 18 - 20 illustrate a UI for a process performed by novice users.

A novice user does not have sufficient knowledge of a domain. Accordingly, the workflow management system 100 provides general knowledge on the domain, and then sequentially presents detailed information.

First, the user creates an original task "requirements analysis of battery functions of mobile phones" on the system, and inputs delivery dates and various conditions that are known at present. Based on the task name and input conditions, the system presents to the user general knowledge on requirements engineering, i.e., methods generally used for requirements analysis, procedures thereof, assumed input/output information, etc. This is realized by reusing task information in the model-based method (reuse of task model) described above. Task instances are also presented.

Referring to FIG. 18, based on task information 301 input by the user, similar task model information 302 and similar task instance information 303 are presented. Further, "Task Model 1" is selected from the similar task model information 302, so that "Task Model 1 related information" is displayed in the right pane as related information 304. In this example, a model describing a standard requirements analysis method of IEEE (Institute of Electrical and Electronic Engineers) and a template thereof are displayed.

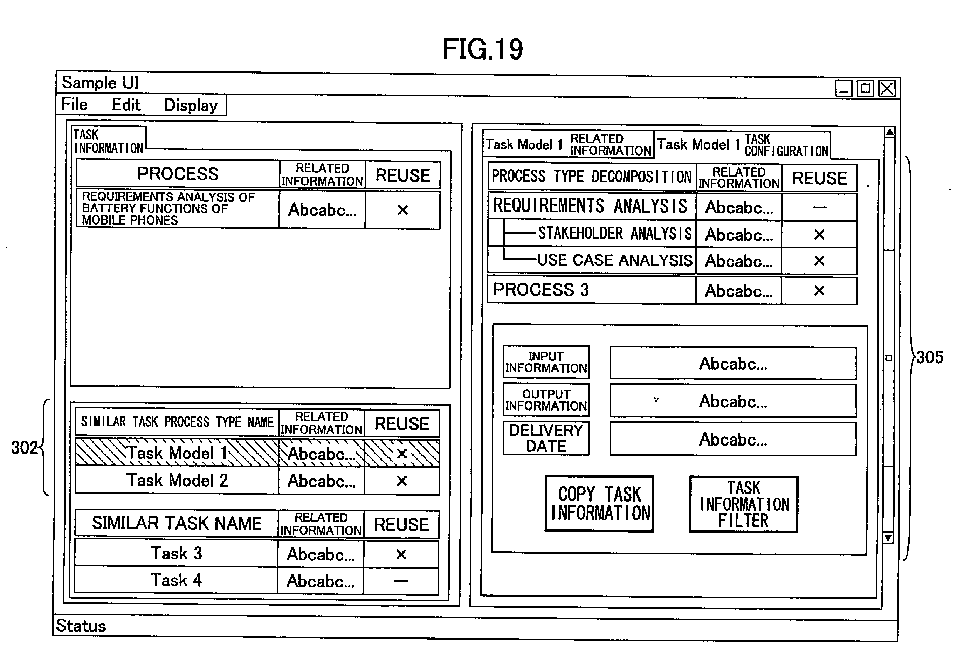

Further, the user can obtain information about the configuration of tasks and subtasks of "Task Model 1". In FIG. 19, a tab "Task Model 1 task configuration" in the right pane is pressed while "Task Model 1" is selected from the similar task model information 302, so that task configuration information 305 is displayed. It is already evident that the user's task is related to requirements analysis. Therefore, the system uses the same query "requirements analysis" to search for past tasks in the task model DB 113 and the task instance DB 114 in the background, and automatically presents them to the user. It is possible to limit access to this information searched for and presented, according to the user's organization.

The information presented is previously loaded in the related information DB 111 and the document DB 112 in the system. This information is added/renewed by the system administrator. However, when a relationship between a task and an input/output document is recorded while a general user uses the system, this relationship is also presented to the user.

Based on the information presented, the user learns that requirements analysis generally includes plural steps, and creates subtasks corresponding to the steps in the system. When creating the subtasks, it is possible to reuse a subtask configuration and related information of a previous task. This is realized by copying searched task information.

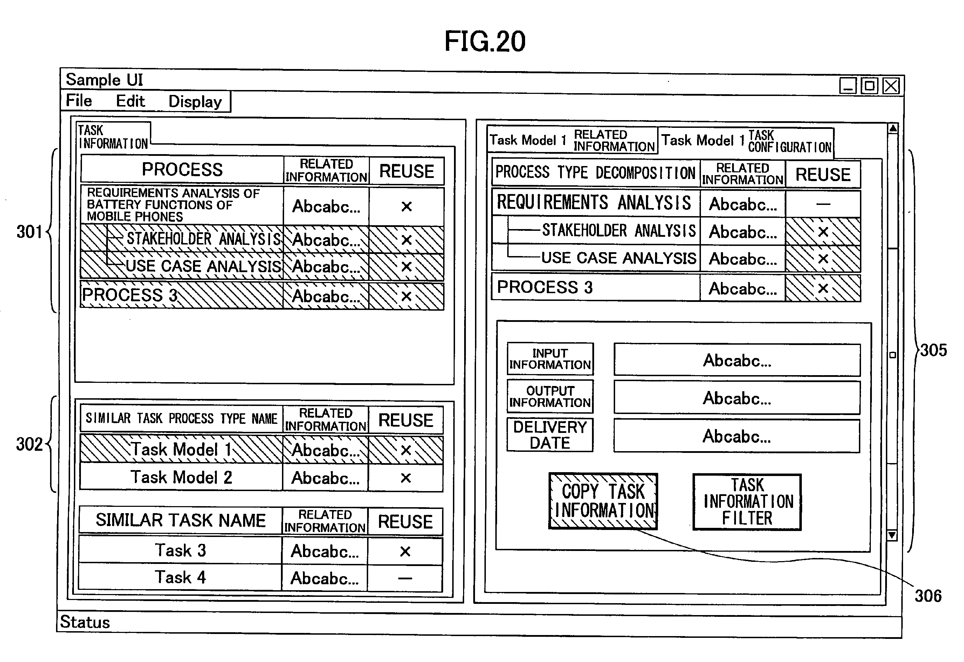

The user selects "Task Model 1" as apparently the most similar task, and confirms the contents thereof (means, procedure, delivery date, etc.). When the user decides to apply the procedure (workflow) to the present task, the user presses a task information copy button 306 from the pane of the task configuration information 305 as shown in FIG. 20, thereby instructing the system to copy the contents.

The system copies a workflow (task configuration, order, information necessary for performing task, delivery date, etc.) of the previous task (task to be reused) to the user's present task. The delivery date does not have to be a definite date; it is possible to set a provisional delivery date based on the present date and by calculating time required for performing the task. Further, for more detailed reuse methods, the above-described "reuse entirely" function and "special reuse" are provided. By displaying dedicated buttons for these functions on the UI, the user's convenience can be enhanced.

In the left pane in FIG. 20, a task configuration and related information of a past task "Task Model 1" is copied as the task information 301.

### <Example UI for process performed by expert user>

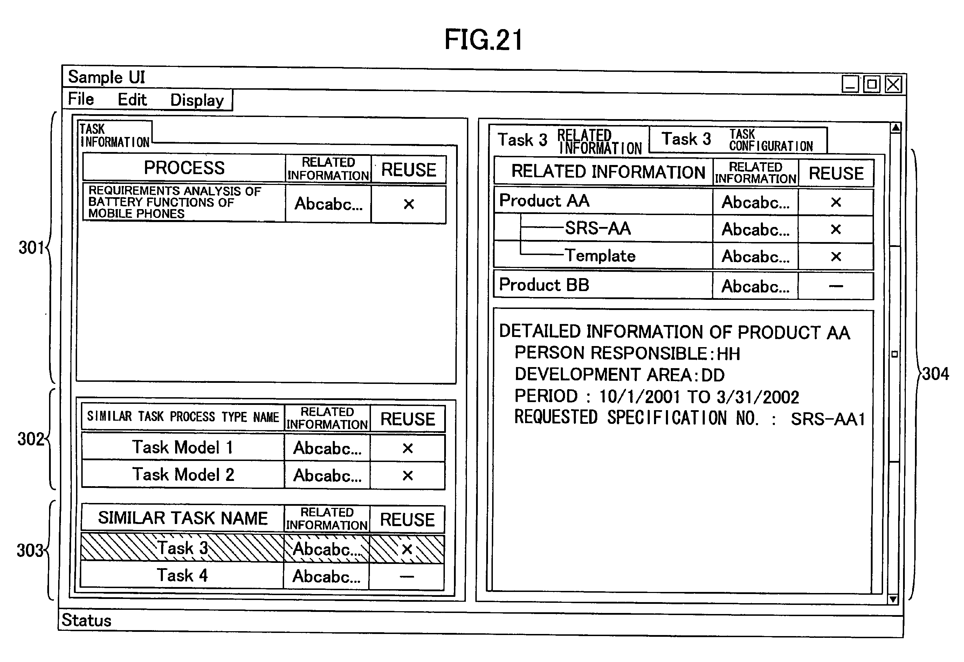

FIGS. 21 - 24 illustrate a UI for a process performed by expert users.

Expert users have sufficient knowledge on a domain, and therefore, presentation of general knowledge on the domain is not as important as the case for novice users. Thus, the function for presenting general knowledge can be turned off according to the user's instruction.

Presentation of information about past similar tasks, which is important information for expert users, is realized primarily by the instance-based reuse method.

Expert users are aware of details about steps in a requirements analysis process, and thus create subtasks based on their knowledge. Input output information and delivery date can be specified for each subtask. However, as in the above-described case of creating a task, when the subtask is created, the system presents to the user information such as input output information and a delivery date of a past similar task. Information can be copied from a past task that the user determines as being highly similar.

Referring to FIG. 21, based on the task information 301 input by the user, the similar task model information 302 and the similar task instance information 303 are presented. Further, "Task 3" is selected from the similar task instance information 303, so that "Task 3 related information" is displayed in the right pane as the related information 304. In this example, "Product AA" and "Product BB" are displayed as related information.

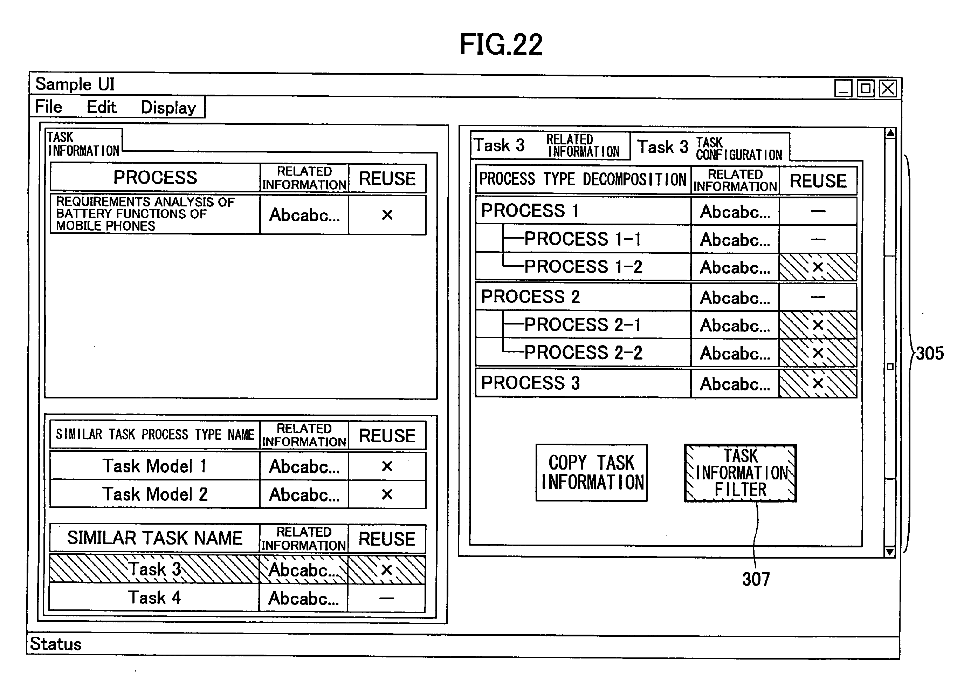

In FIG. 21, a tab "Task 3 task configuration" in the right pane is pressed, so that task configuration information 305 is displayed as shown in FIG. 22.

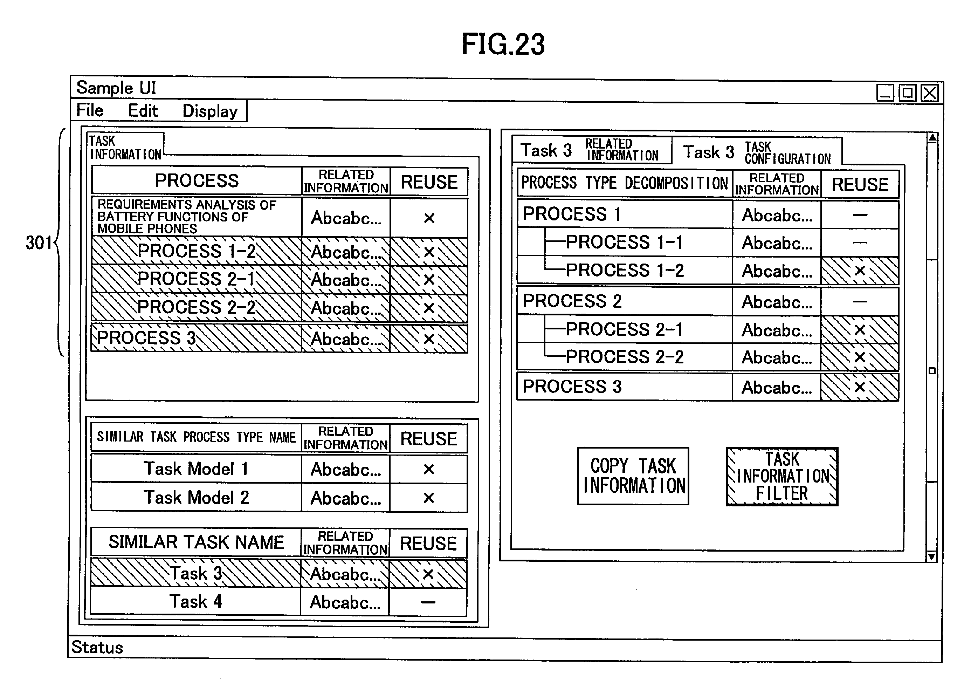

It is assumed that the user considers that some of the subtasks of "Task 3" can be reused, and decides to reuse steps 1-2, 2-1, 2-2, and step 3 shown in FIG. 22. The user marks check boxes of "reuse" corresponding to these steps, and presses a task information filter button 307 so that these tasks are copied as subtasks of the present task. With the filter function, information such as the executor of the task and the actual delivery date are excluded from information to be reused. In the left pane in FIG. 23, a task configuration and related information of a past task "Task 3" is copied as the task information 301.

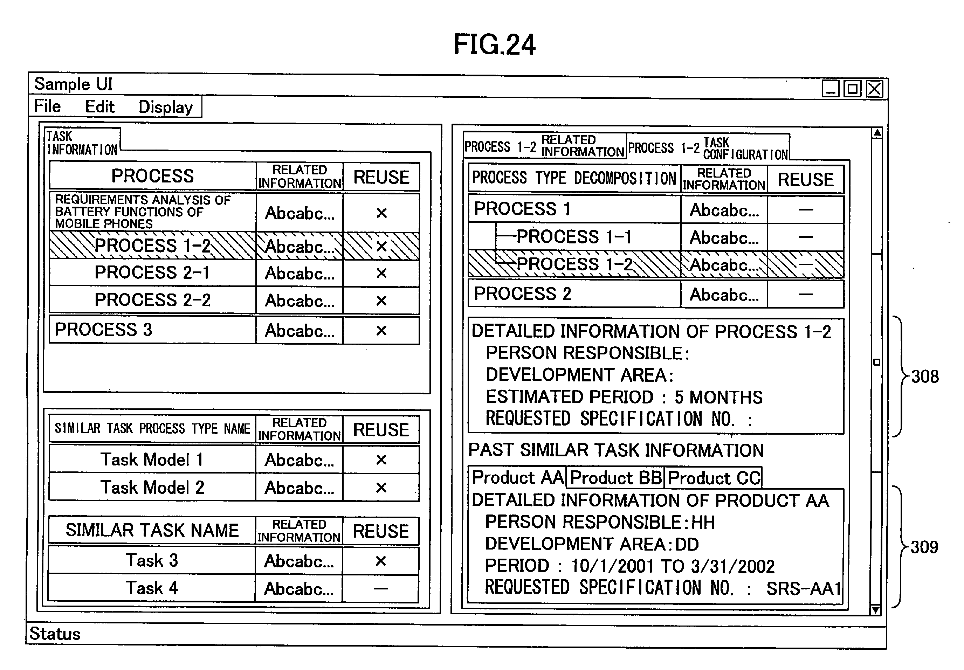

When the copied step 1-2 is selected and detailed information is displayed, information of the copy source is also displayed. FIG. 24 is an example screen when reference is actually made to copied task information. Detailed information 308 of the step 1-2 and detailed information 309 of the Product AA, etc., are displayed. The filter function is used when copying the task information, and therefore, information such as time periods is not copied. However, information on similar tasks is displayed as past similar task information based on information on the copy source.

### <Example screens of related information>

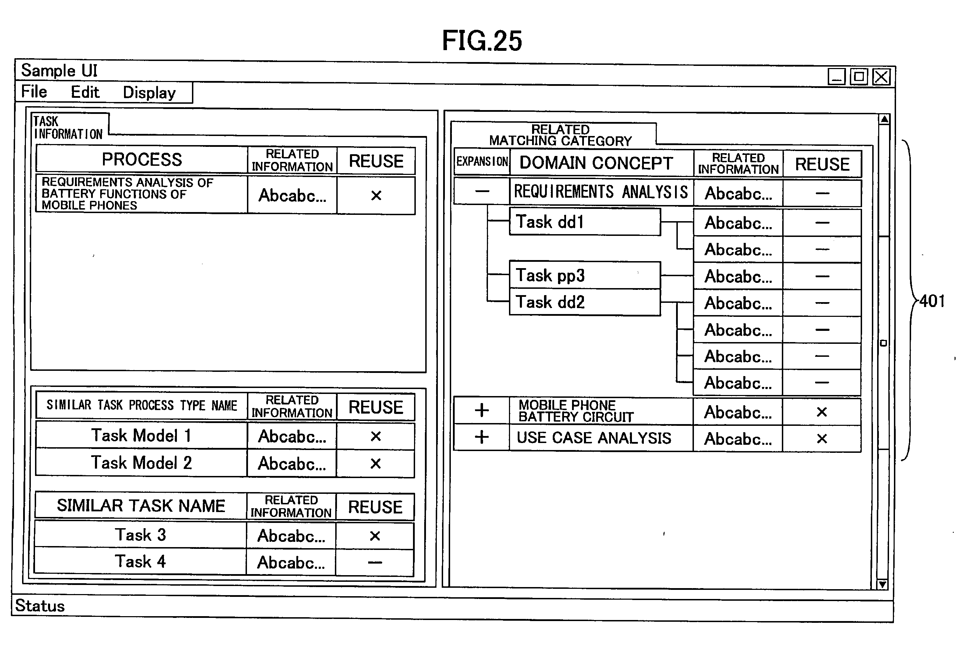

FIGS. 25 to 28 are example screens of related information.

As described above, the workflow management system 100 according to the embodiment of the present invention presents information related to task execution for each of the user's tasks. Therefore, the related information found by the search needs to be presented in association with the user's task. The simplest way is to display related information when details of a task are displayed. Another way is to display information that is most related to each task (information that has the highest degree of similarity in a similarity rating) when a task list is displayed.

When related information is searched for in the matching category system, a large number of information items may be found as a result of the search. In this case, to improve readability, the related information can be displayed in a tree structure using task names.

FIG. 25 is an example screen of such a case. In related information 401 in the right pane, "+" in the "expand" column indicates that the tree is closed, and "-" in the "expand" column indicates that the tree is expanded. By clicking these icons, expansion of a tree can be controlled. By marking check boxes of the "reuse" column, related information can be copied to the present task of the user.

When related information is displayed by using the matching category system as shown in FIG. 25, the information is reused by the following methods.
(1) Reuse by category
(2) Reuse by special information only

Here, reuse corresponds to copying related information, which is found as a result of searching, to a user's present task as related information. This function is realized by the "reuse" button. In either of the above methods, when related information is copied, the data structure as shown in FIG. 5 is retained. Therefore, the user can track the registrant and matching category related information from the copied related information.

In recent years and continuing, office operations often require reference to a large amount of information at once. However, display panels functioning as image display means and printers have limited capabilities. It is therefore difficult to use applications in real time in mobile offices or conference rooms where laptop computers are used. The same applies to workflow modeling. For example, at a conference with experts in a particular operational domain, it is effective if a user having knowledge for modelization performs the modelization in real time. However, problems are likely to occur in comprehending a large amount of information.

This problem is addressed with a UI described below.

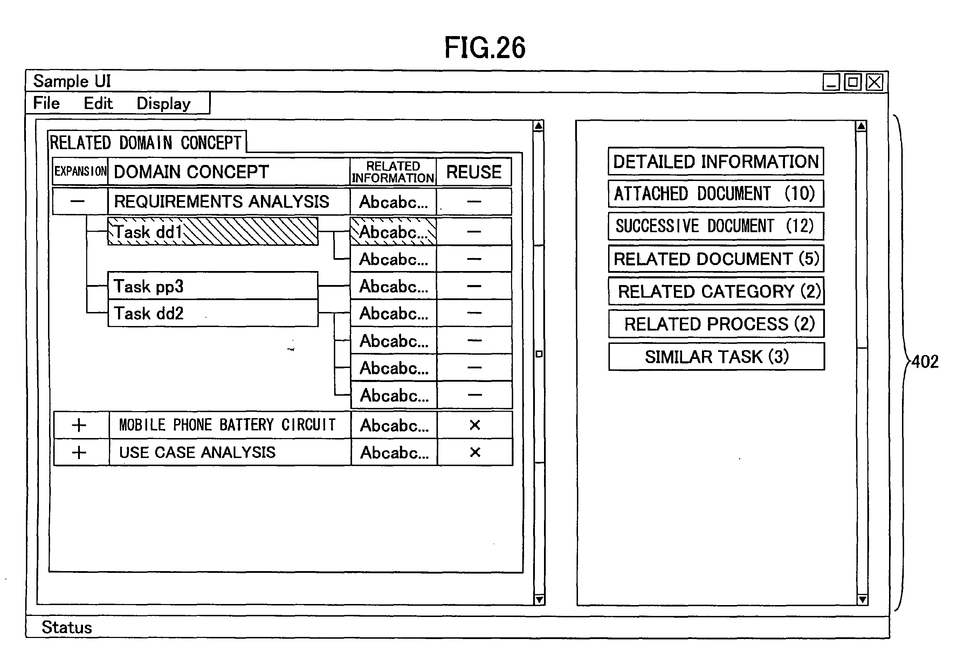

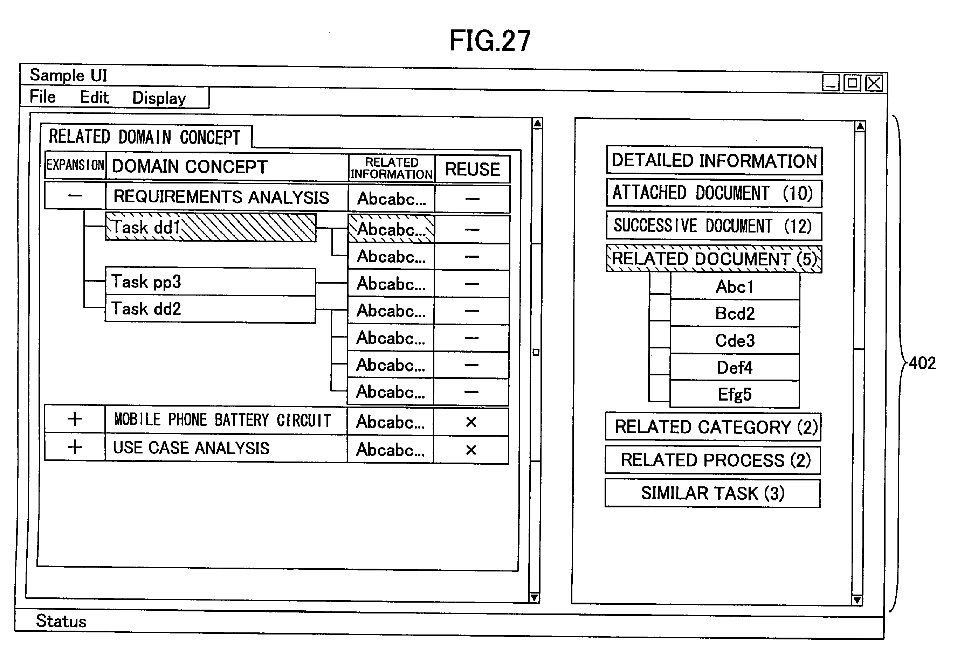

First, to effectively use a limited area of a screen, a large area is used for displaying a workflow model, which is the primary operation, and related information is collectively displayed in an independent frame. FIG. 26 is an example of such a display screen. The area of a related information frame 402 is limited, and therefore, each information set is arranged in a box-shaped icon. Only the number of available information items under each information set is shown after the name of the information set. When a user is interested in an information set, he can refer to the actual list of information items by clicking the corresponding box (expandable list). FIG. 27 shows a status when "related documents" is expanded in the related information frame 402. When the actual list is displayed, by clicking an information item in the list, an information item is displayed in a new window.

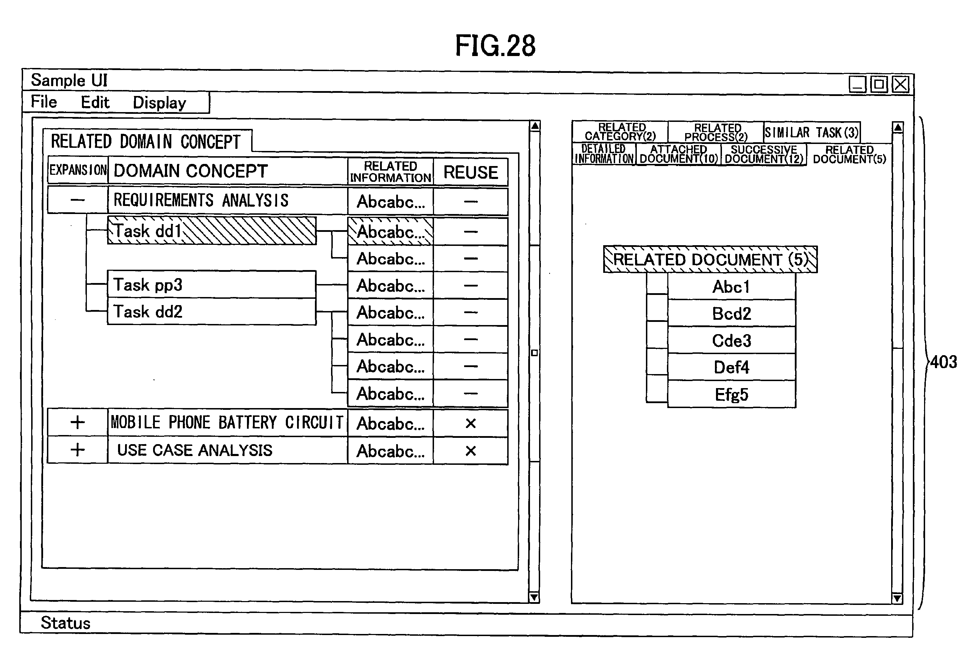

In the above example, information items are displayed by using an expandable list; however, this function can be realized by using a tab structure. An example is shown in FIG. 28. In the right pane 403, related information of a selected task is displayed. Names of information sets and the number of available information items under each information set are shown in tabs. The user can survey how much information is available at this point, thus eliminating a useless action of expanding a list to find that there are zero information items. FIG. 28 shows a status when "related documents" is selected in the right pane 403, so that a list of related documents is expanded and displayed. In this example, information items related to task modeling are classified into seven sets, as described with reference to FIG. 6. Specifically, the sets are detailed information, attached document, successive document, related document, related category, related process, and similar task.

### <Summary>

As described above, the embodiment of the present invention provides two reusing means (including searching means), namely, a "model-based reuse" method of reusing relatively general process information and an "instance-based reuse" method of reusing relatively specific information. Accordingly, a dynamic workflow can be constructed more efficiently. In both the model-based reuse method and the instance-based reuse method, plural candidates are presented for the user to make a selection. Accordingly, a workflow can be constructed with a higher level of freedom.

Information about a domain of the present task is presented in a timely manner. Examples of the information are process information, information necessary for execution of the process, or meta-information (template, route through which information is obtained, etc.) of the necessary information. Accordingly, a mechanism for enhancing convenience of a dynamic workflow operational system is provided, and the actual task is executed with a high level of usability.

The present invention is not limited to the specifically disclosed embodiment, and variations and modifications may be made without departing from the scope of the present invention.

## Claims

1. A workflow management system **characterized by** comprising:
a task model holding unit configured to hold a task model created by generalizing a past task instance of a workflow;
a task instance holding unit configured to hold a specific past task instance of a workflow;
a task model reusing unit configured to reuse the task model by searching the task model holding unit according to user-specified input information and copying information from the task model found; and
a task instance reusing unit configured to reuse the task instance by searching the task instance holding unit according to user-specified input information and copying information from the task instance found.

2. The workflow management system according to claim 1, further comprising:
a filtering unit configured to delete information inappropriate for reuse from the information copied from the task model found or the task instance found.

3. The workflow management system according to claim 1 or 2 further comprising:
an interface from which an instruction is given to reuse the task model found or the task instance found in units of task models or task instances.

4. The workflow management system according to claim 1, 2 or 3 further comprising:
an interface from which an instruction is given to reuse the task model found or the task instance found in units of task models or task instances and subtasks belonging to the task models or the task instances.

5. The workflow management system according to any one of the preceding claims, further comprising:
an interface from which an instruction is given to entirely reuse the task model found or the task instance found.

6. The workflow management system according to any one of the preceding claims, further comprising:
an interface from which an instruction is given to reuse the task model found or the task instance found in units of task models or task instances and subtasks belonging to the task models or the task instances, up to a layer of the subtasks according to a specified layer value.

7. The workflow management system according to any one of the preceding claims further comprising:
a presenting unit configured to acquire and present related information related to the task model or the task instance to be reused.

8. The workflow management system according to claim 7, wherein the presenting unit is adapted to
sequentially trace parent task models or parent task instances back from the task model or the task instance to be reused, and to
acquire the related information from the parent task models or the parent task instances.

9. The workflow management system according to claim 7 or 8, wherein the presenting unit is adapted to
acquire the related information from the task model or the task instance to be reused and/or from a task model or a task instance similar to the task model or the task instance to be reused.

10. The workflow management system according to claim 7, 8 or 9, wherein the presenting unit is adapted to acquire the related information from a matching category created by grouping together related task models or related task instances.

11. The workflow management system according to claim 7,8, 9 or 10, further comprising:
an interface configured to display the acquired related information in an expandable tree structure.

12. The workflow management system according to claim 7, 8, 9, 10 or 11, further comprising:
an interface configured to display the acquired related information in expandable boxes, each of the boxes being labeled with a classification of the related information and a number of information items under each classification.

13. The workflow management system according to any one of claims 7 to 12 further comprising:
an interface configured to display the acquired related information in tabs, each of the tabs being labeled with a classification of the related information and a number of information items under each classification.

14. A workflow management method **characterized by** comprising the steps of:
(a) holding a task model created by generalizing a past task instance of a workflow;
(b) holding a specific past task instance of a workflow;
(c) reusing the task model by searching for the task model held at step (a) according to user-specified input information and copying information from the task model found; and
(d) reusing the task instance by searching for the task instance held at step (b) according to user-specified input information and copying information from the task instance found.

15. The workflow management method according to claim 14, further comprising the step of:
(e) deleting information inappropriate for reuse from the information copied from the task model found or the task instance found.

16. The workflow management method according to claim 14 or 15, further comprising a step of:
(f) acquiring and presenting related information related to the task model or the task instance to be reused.

17. The workflow management method according to claim 16, wherein
the step (f) includes sequentially tracing back parent task models or parent task instances from the task model or the task instance to be reused, and acquiring the related information from the parent task models or the parent task instances.

18. The workflow management method according to claim 16 or 17, wherein
the step (f) includes acquiring the related information from the task model or the task instance to be reused and from a task model or a task instance similar to the task model or the task instance to be reused.

19. The workflow management method according to claim 16, 17 or 18, wherein
the step (f) includes acquiring the related information from a matching category created by grouping together related task models or related task instances.
